Europäisches Patentamt

European Patent Office

Office européen des brevets

(11) Publication number: **0 187 769 B1**

# EUROPEAN PATENT SPECIFICATION
## published in accordance with Art. 158(3) EPC

(45) Date of publication of patent specification: **15.05.91**  (51) Int. Cl.⁵: **F16K 15/02**

(21) Application number: **85902929.0**

(22) Date of filing: **11.06.85**

(86) International application number:
**PCT/US85/01086**

(87) International publication number:
**WO 86/00681 (30.01.86 86/03)**

(54) **IN-LINE CHECK VALVE HAVING COMBINED DOWNSTREAM POPPET SUPPORT AND FLOW CONTROL ELEMENTS.**

(30) Priority: **17.07.84 US 631594**

(43) Date of publication of application:
**23.07.86 Bulletin 86/30**

(45) Publication of the grant of the patent:
**15.05.91 Bulletin 91/20**

(84) Designated Contracting States:
**DE FR GB IT NL**

(56) References cited:
| | |
|---|---|
| US-A- 2 722 232 | US-A- 2 745 628 |
| US-A- 2 918 083 | US-A- 2 928 416 |
| US-A- 2 942 617 | US-A- 2 943 639 |
| US-A- 3 329 154 | US-A- 3 373 764 |
| US-A- 3 688 794 | US-A- 3 995 658 |
| US-A- 4 152 893 | |

(73) Proprietor: **BRUNSWICK VALVE AND CON-
TROL, INC.**
**1020 Rankin Road**
**Houston, TX 77073(US)**

(72) Inventor: **PETERSEN, Oscar, J.**
**667 S. Schug**
**Orange, CA 92669(US)**
Inventor: **BARTON, Ross, J.**
**2725 San Lucas Lane**
**Costa Mesa, CA 92626(US)**
Inventor: **DALKE, Jack, E.**
**11725 Ramsey Drive**
**Whittier, CA 90605(US)**
Inventor: **SHEFFIELD, Gerald, W.**
**1814 Meriday Lane**
**Santa Ana, CA 93706(US)**
Inventor: **TOWLE, Theodore**
**15322 Fieldston Lane**
**Huntington Beach, CA 92647(US)**

(74) Representative: **Patentanwälte Grünecker, Kinkeldey, Stockmair & Partner Maximilianstrasse 58 W-8000 München 22(DE)**

## Description

## IN-LINE FLUID FLOW CHECK VALVE

This invention relates generally to an in-line fluid flow check valve comprising:
an in-line housing having an internal concentric orifice;
a seat surrounding said orifice and being part of a seat sealing means circumferentially surrounding said seat;
an axially aligned poppet having a poppet head and a seal face cooperating with said seat sealing means;
a stem on said poppet extending downstream from said seal face;
a poppet support downstream said orifice, defining a poppet guide;
means mounting said stem internal said guide for reciprocating motion therein;
means mounting said poppet support in said housing thereby defining a relief flow passage and fluid containment chamber for poppet flow and check positions, respectively;
first and second flow lengths in said passage;
a compression spring concentric to said poppet guide and intermediate to said and poppet head and guide;
means including an insert means initially compressing said spring and establishing a predetermined poppet/seal force.

In-line fluid flow check valves are generally disclosed in US Patent Nos. 2,918,083 and 2,928,416. They employ poppet and seat constructions, which during the non-check or flow condition result in highly turbulent flow regimes downstream of the flow checked orifice. The highly turbulent regimes result in an increased pressure drop through the check valve, sometimes requiring an increase in diameter in order to achieve an acceptable flow characteristic in a given application.

Generic US-A-2,722,232 shows an in-line check valve with features as listed above, the seat sealing means of which consist out of a metal ring, which itself is seated in said insert means. A screw is securing the ring to the insert means. In a circumferential groove an O-ring seal is arranged for sealing the ring against the insert.

This known seat seal provides a metal-to-metal contact with the poppet head. In some instances this contact is not enough in order to safely shut off the fluid flow.

It is the object of this invention to provide a simply constructed improved in-line fluid flow check valve which provides a better sealing and which securely prevents a back flow.

This object is solved in that said seat sealing means contain a resilient "O"-ring partially embedded in a groove and that said seat sealing means are part of said insert means for achieving metal-to-metal contact.

The sealing means according to the invention, therefore, provides two separate seals, namely the resilient "O"-ring, mounted in its groove and the metal to metal seal achieved by the contact of the poppet head with the insert means. The seal groove may be angularly orientated in order to retain the seal during high flow conditions.

The check valve of the invention demonstrates substantially decreased pressure drop or increased flow capability. The improvement is achieved through positioning the poppet closure member, poppet stem support, and closure spring downstream of the checked orifice. It establishes an elementary convergent/divergent flow passage resulting in substantially reduced pressure drop in the unchecked or open positions.

In the following an embodiment of the invention is described along with a drawing:

Figure 1 is a sectional view of the check valve of the invention showing only the flow control insert assembly.

Figure 2 is a sectional view of the check valve of the invention particularly showing the flow control insert positioned within a housing of the preferred embodiment.

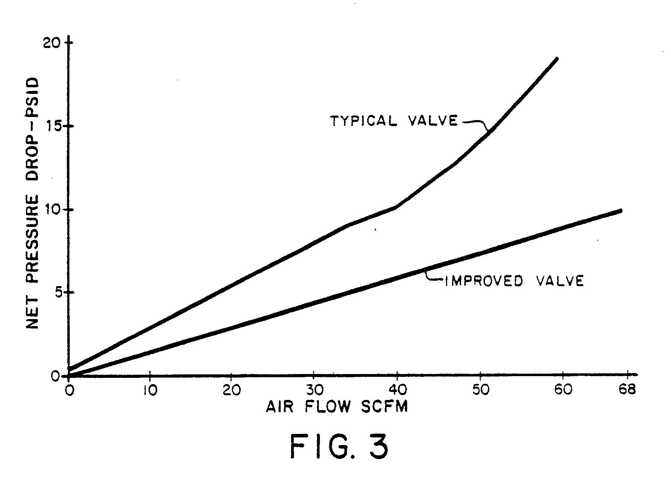

Figure 3 is a performance curve of the check valve of the invention in the open or unchecked position, wherein pressure drop through the improved valve is compared to that of valves in current use.

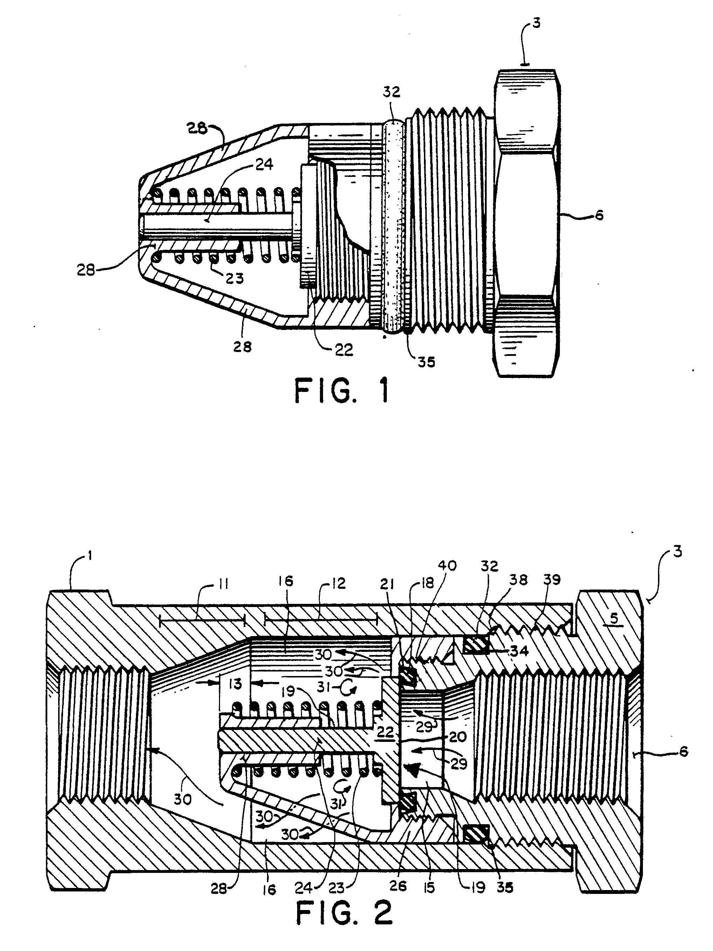

Referring first to Figure 2 with occasional reference to Figure 1, the disclosed improved check valve comprises an insert assembly 3 positioned internal of a preferred housing 1. The insert assembly 3 incorporates a flow inlet 6 in fluid communication with a flow orifice 15, having a circumferential seal 18 contained by an angularly disposed groove 21. Flow through the orifice 15 in the check position is controlled by an axially positioned poppet 19 having a poppet stem 24, and a poppet head 22. The poppet head 22 in check operation cooperates with the seal 18, thereby shutting off flow through the orifice 15 in the check or non-flow direction.

The poppet stem 24 reciprocates within the concentric poppet guide 28. The concentric guide 28 has outboard support in the form of a plurality of support vanes or flow baffles extending from the insert base to the further extension of the concentric guide. Typically, four vanes spaced ninety radial degrees are employed. A poppet closure spring 23 is contained intermediate the poppet head 22 and the opposite end of the concentric poppet guide 28.

Surrounding the insert assembly 3 particularly adjacent to the downstream extension of the poppet stem 24 and poppet guide 28, are the body first flow length 12 and abutting second flow length 11. The downstream portion of the poppet concentric guide 28 is positioned so as to have a predetermined extension into or overlap 13 with the upstream portion of the converging or second flow length 11.

In non-check or flow operation, fluid entering the inlet 6, upon exceeding the pressure required to overcome the preset bias of poppet spring 23 due to force exerted on the upstream face of the poppet 19, lifts the poppet head 22 from its' sealing cooperation with seal 18 as positioned within angularly disposed or the oblique groove 22. Lift off of the poppet head 22 from sealing engagement with seal 18 allows fluid flow through the orifice 15, along the direction of arrows 29 and into a relief flow passage generally shown as 16, in the direction of arrow 30. The presence of the flow baffles 28, poppet stem 24, and bias spring 23, inhibit the information of turbulent vortices 31 in the portions 11 and 12 of passage 16, resulting in substantially reduced pressure drop during flow conditions. Further, during non-check or flow conditions, the combination of first flow length or portion 12, and second flow length or portion 11, cooperate with the aforementioned poppet guide 28 to establish an elementary convergent/divergent nozzle.

In either flow or check operation, containment of the valve internal fluid is greatly enhanced through the use of primary and secondary seals. As shown, a radial seal 32 is contained in a peripheral groove 34 located on the inlet adapter 5, intermediate first and second threaded portions, i.e. 39 and 40, respectively. Contained in the groove 34 is a static seal 32. The groove 34 has at its inlet end, a shoulder 35, abutting and terminating the internal end of the threaded section 39. As shown, in its assembled position the inlet adapter 5 is in interference abutment with connoidal section 38 of the housing 1. The sealing combination of peripheral seal 32 and cooperating surfaces 32 and 35 essentially eliminate any possibility of non-containment of valve internal fluid via leakage from pressurized fluids internal of the housing 1 upstream of the orifice 15, when the poppet 22 is operating in its check position (reference Figure 2).

## Claims

1. In-line fluid flow check valve comprising:
   an in-line housing (1) having an internal concentric orifice;
   a seat surrounding said orifice and being part of a seat sealing means circumferentially surrounding said seat;
   an axially aligned poppet (19) having a poppet head (22) and a seal face cooperating with said seat sealing means;
   a stem (24) on said poppet extending downstream from said seal face;
   a poppet support downstream said orifice, defining a poppet guide (28);
   means mounting said stem internal said guide for reciprocating motion therein;
   means mounting said poppet support in said housing thereby defining a relief flow passage and fluid containment chamber for poppet flow and check positions, respectively;
   first and second flow (11,12) lengths in said passage;
   a ccmpression spring (23) concentric to said poppet guide and intermediate to said poppet head and guide;
   means including an insert means (3) initially compressing said spring and establishing a predetermined poppet/seal force; characterized in that said seat sealing means contain a resilient "O"-ring (18) partially embedded in a groove (21) and that said seat sealing means are part of said insert means for achieving metal-to-metal contact.

2. The valve of claim 1 wherein said poppet support extends through said first flow length and partially into said second flow length.

3. The valve of claim 2, wherein said first flow length is essentially cylindrical and said second flow length is a truncated conoid.

## Revendications

1. Clapet de retenue en ligne et régulateur de débit comprenant :
   un boîtier en ligne (1) comportant un orifice interne concentrique ;
   un siège entourant ledit orifice et faisant partie d'un moyen d'étanchéité de siège entourant la circonférence dudit siège ;
   un clapet aligné dans la direction axiale (19) comportant une tête de clapet (22) et une face d'étanchéité qui coopère avec ledit moyen d'étanchéité de siège ;
   une tige (24) fixée sur ledit clapet s'étendant vers l'aval à partir de ladite face d'étanchéité ;
   un support de clapet en aval dudit orifice, délimitant un guide de clapet (28) ;
   un moyen de montage de ladite tige à l'intérieur dudit guide en coulissement dans ce guide dans ce guide ;
   un moyen de montage dudit support de clapet dans ledit boîtier en délimitant ainsi un passage de régulateur de débit et une chambre de retenue du fluide respectivement dans les positions d'écoulement et de contrôle du clapet ; un premier et un second tronçons d'écoulement (11, 12) dans ledit passage ; un ressort de compression (23) concentrique avec ledit guide de clapet et en position intermédiaire entre ladite tête de clapet et ledit guide ; des moyens comprenant un moyen à encastrer (3) qui comprime à l'origine ledit ressort et appliquant une force prédéterminée clapet/force d'étanchéité, caractérisé en ce que ledit moyen d'étanchéité du siège comporte un joint annulaire (18) partiellement logé dans une rainure (21) et en ce que ledit moyen d'étanchéité du siège est constitué d'une partie dudit moyen à encastrer pour réaliser un contact métal-sur-métal.

2. Clapet selon la revendication 1, dans lequel ledit support de clapet traverse ledit premier tronçon d'écoulement et partiellement ledit second tronçon d'écoulement.

3. Clapet selon la revendication 2, dans lequel ledit premier tronçon d'écoulement est essentiellement cylindrique et ledit second tronçon d'écoulement est un cône tronqué.

**Ansprüche**

1. Durchlaufströmungsflußrückschlagventil mit:

    einem Durchlaufgehäuse (1) mit einer internen konzentrischen Öffnung;

    einem die Öffnung umgebenden Auflager, das ein Teil einer Auflagerdichteinrichtung bildet, die das Auflager peripher umgibt;

    einem axial ausgerichteten Ventilkegel (19), der einen Ventilkegelkopf (22) und eine Abdichtstirnfläche aufweist, die mit der Auflagerabdichtungseinrichtung zusammenwirkt;

    einem Schaft (24), der von dem Ventilkegel stromabwärts von der Abdichtstirnfläche absteht;

    einer Ventilkegelstütze stromabwärts von der Öffnung, die eine Ventilkegelfürung (28) darstellt;

    einer Einrichtung zur Halterung des Schaftes innerhalb der Führung zu einer Hin- und Herbewegung innerhalb der Führung;

    einer Einrichtung zur Halterung der Ventilkegelstütze in dem Gehäuse, wodurch ein Entlastungsströmungsdurchgang und eine Flüssigkeitsaufnahmekammer für die Ventilkegelströmung und entsprechende Kontrollstellungen definiert ist;

    einer ersten und zweiten Strömungslänge (11, 12) in dem Durchgang;

    einer Kompressionsfeder (23) die konzentrisch zu der Ventilkegelführung und zwischen dem Ventilkopf und der Führung angeordnet ist;

    einer Einrichtung mit einem Einsatzstück (3), die anfänglich die Feder zusammendrückt und eine vorherbestimmte Ventilkegel/Dichtkraft einstellt,
    **dadurch gekennzeichnet,**
    daß die Auflagerabdichteinrichtung einen flexiblen "O"-Ring (18) enthält, der teilweise in einer Nute (21) eingelegt ist und daß die Auflagerabdichteinrichtung ein Teil des Einsatzstückes ist, um einen Metall-Metallkontakt zu erzielen.

2. Das Ventil nach Anspruch 1,
    **dadurch gekennzeichnet,**
    daß die Ventilkegelstütze sich über die erste Strömungslänge erstreckt und teilweise bis in die zweite Strömungslänge hineinragt.

3. Das Ventil nach Anspruch 2,
    **dadurch gekennzeichnet,**
    daß die erste Strömungslänge im wesentlichen zylindrisch ausgebildet ist und die zweite Strömungslänge als abgestumpfte Konoide ausgebildet ist.

FIG. 1

FIG. 2

FIG. 3